# EUROPÄISCHE PATENTSCHRIFT

(11) **EP 2 791 583 B1**
(45) Veröffentlichungstag und Bekanntmachung des Hinweises auf die Patenterteilung: **18.10.2017**
(21) Anmeldenummer: 12801534.4
(22) Anmeldetag: 07.12.2012
(51) Int. Cl.: H05B 6/64, F24C 7/08, F27D 19/00

(54) **HAUSHALTSGERÄT UND VERFAHREN**
DOMESTIC APPLIANCE AND METHOD
APPAREIL MÉNAGER ET PROCÉDÉ ASSOCIÉ

(30) Priorität: 14.12.2011 DE 102011088483
(43) Veröffentlichungstag der Anmeldung: 22.10.2014
(73) Patentinhaber: BSH Hausgeräte GmbH, 81739 München (DE)
(72) Erfinder: KERN, Andreas, 20253 Hamburg (DE); WISCH, Kristina, 20259 Hamburg (DE); FRIEDRICH, Claudia Sonja, 22765 Hamburg (DE); STRAYLE, Sören, 81667 München (DE); JACOB, Frank, 20259 Hamburg (DE)
(86) Internationale Anmeldenummer: PCT/EP2012/074830
(87) Internationale Veröffentlichungsnummer: WO 2013/087537

(56) Entgegenhaltungen:
- EP-A1- 0 213 442
- WO-A2-2009/068387
- DE-A1-102008 026 527
- DE-A1-102008 032 453
- JP-A- 2005 291 549

## Beschreibung

Die vorliegende Erfindung betrifft ein Haushaltsgerät, insbesondere ein Gargerät, sowie ein Verfahren zum Betreiben eines Haushaltsgeräts.

Bedieneinrichtungen für Gargeräte sind bekannt. Solche Bedieneinrichtungen umfassen üblicherweise eine Anzeigeeinrichtung und eine Eingabeeinrichtung. Auf der Anzeigeeinrichtung werden verschiedene Betriebsarten des Gargeräts angezeigt. Solche Betriebsarten können beispielsweise mit "Heißluft", "Oberhitze" oder "Unterhitze" bezeichnet sein und die Art und Weise der Wärmebeaufschlagung des Garguts in dem Garraum definieren. Mittels der Eingabeeinrichtung kann ein Benutzer unter den verschiedenen Betriebsarten die jeweils gewünschte Betriebsart auswählen. Außerdem ist es üblich, dass der Benutzer innerhalb der ausgewählten Betriebsart eine Temperatur vorgeben kann, beispielsweise "185°".

WO 2009/068387 A2 offenbart eine Hausgerätanzeigevorrichtung mit einer Anzeigeeinheit sowie zumindest einer Steuereinheit, welche eine Datensammlung aufweist. Die Datensammlung weist eine Datenmenge auf, welche dazu vorgesehen ist, einen von der Anzeigeeinheit in einem Betriebsmodus angezeigten Teil einer Grafik hinsichtlich einer Darstellungsgröße verändert darzustellen.

JP 2005 291549 A offenbart ein Heizkochgerät, welches ein erstes und ein zweites Anzeigemittel aufweist. Die Größe der Anzeigen auf dem ersten und dem zweiten Anzeigemittel können verändert werden.

Aufgabe der vorliegenden Erfindung ist es, ein Haushaltsgerät, insbesondere ein Gargerät, bereitzustellen, welche eine einfachere, insbesondere intuitivere Bedienbarkeit aufweist.

Zur Lösung dieser Aufgabe wird ein Haushaltsgerät, insbesondere ein Gargerät, mit einem ersten Anzeigebereich zur Anzeige erster Betriebseinstellungen des Haushaltsgeräts, einem ersten Bedienelement zur Auswahl einer der ersten Betriebseinstellungen, einem zweiten Anzeigebereich zur Anzeige zweiter Betriebseinstellungen des Haushaltsgeräts, einem zweiten Bedienelement zur Auswahl einer der zweiten Betriebseinstellungen und einer Steuereinrichtung vorgeschlagen. Die Steuereinrichtung ist dazu eingerichtet, bei einer Betätigung des ersten Bedienelements durch einen Benutzer dem ersten Anzeigebereich eine erste flächige Ausdehnung und dem zweiten Anzeigebereich eine zweite flächige Ausdehnung zuzuweisen. Die Steuereinrichtung ist ferner dazu eingerichtet, bei einer Betätigung des zweiten Bedienelements durch den Benutzer dem ersten Anzeigebereich eine dritte flächige Ausdehnung und dem zweiten Anzeigebereich eine vierte flächige Ausdehnung zuzuweisen. Die dritte flächige Ausdehnung ist kleiner als die erste flächige Ausdehnung, und die vierte flächige Ausdehnung ist größer als die zweite flächige Ausdehnung.

Mit anderen Worten wird also immer der Anzeigebereich vergrößert dargestellt, in welchem der Benutzer mittels des entsprechenden Bedienelements seine Auswahl treffen möchte. Der jeweils andere Anzeigebereich, in dem der Benutzer momentan keine Auswahl treffen möchte, wird dagegen verkleinert dargestellt. Die in einem jeweiligen Anzeigebereich dargestellte Betriebseinstellung skaliert automatisch mit der Vergrößerung bzw. Verkleinerung des jeweiligen Anzeigenbereichs, d.h. die Betriebseinstellung wird mit dem jeweiligen Anzeigebereich mitvergrößert bzw. mitverkleinert. Somit wird immer diejenige Information vergrößert dargestellt, welche Gegenstand der Interaktion des Benutzers mit dem Haushaltsgerät ist. Somit rückt diese Information noch mehr in den Fokus des Betrachters. Dadurch ergibt sich eine bessere, intuitivere Bedienung, weil wahrnehmungspsychologisch vorteilhaft. Erfindungsgemäß ist ein Bildschirm vorgesehen, welcher den ersten und zweiten Anzeigebereich aufweist. Die Steuereinrichtung ist dazu eingerichtet, die beiden Anzeigebereich auf dem Bildschirm zu verschieben, wenn der Benutzer zunächst das eine und dann das andere Bedienelement betätigt. Das Verschieben der beiden Anzeigebereiche zusätzlich zur Vergrößerung bzw. Verkleinerung erlaubt es, diejenige Information, die Gegenstand der Interaktion des Benutzers mit dem Haushaltsgerät ist, mittig im Gesichtsfeld des Betrachters zu positionieren. Dadurch verstärkt sich die Fokussierung auf diese Information beim Betrachter weiter.

Gemäß einer weiteren Ausführungsform überlappen sich der erste Anzeigebereich in seiner ersten flächigen Ausdehnung und der zweite Anzeigebereich in seiner vierten flächigen Ausdehnung. Dieses "Überlappen" findet natürlich nie gleichzeitig statt, da die erste flächige Ausdehnung und die vierte flächige Ausdehnung zu unterschiedlichen Zeitpunkten - einerseits bei Betätigung des ersten Bedienelements und andererseits beim Betätigen des zweiten Bedienelements - vorgesehen werden. Vielmehr bezieht sich das "Überlappen" auf einen Flächenbereich, welcher von der ersten flächigen Ausdehnung und der vierten flächigen Ausdehnung belegt wird, wenn auch zu unterschiedlichen Zeitpunkten. Dadurch entsteht ein Verdrängungseffekt, das heißt, die Information, welche Gegenstand der Interaktion des Benutzers mit dem Haushaltsgerät ist, verdrängt die zuvor angezeigte Information räumlich. Dadurch erhöht sich die Fokussierung des Betrachters auf die jeweils aktuelle Information noch mehr. Erfindungsgemäß weisen die beiden Anzeigebereiche jeweils einen Referenzpunkt auf. Der Referenzpunkt des ersten Anzeigebereichs und der Referenzpunkt des zweiten Anzeigebereichs weisen vor und nach dem Verschieben denselben Abstand auf. Somit werden der erste und zweite Anzeigebereich "miteinander" verschoben. Die Referenzpunkte können jeweils im Bereich einer jeweiligen Ecke des jeweiligen Anzeigebereichs vorgesehen sein.

Die ersten Betriebseinstellungen können mehrere Betriebsarten des Haushaltsgeräts beschreiben. Die Betriebsarten, beispielsweise "Oberhitze" oder "Unterhitze", welche auch als "Programme" bezeichnet werden, beschreiben eine Vielzahl von Abläufen und/oder Betriebsparametern für das Haushaltsgerät. Beispielsweise definiert die Betriebsart "Oberhitze", dass ein oberes Heizelement in einem Garraum eines als Backofen ausgebildeten Haushaltsgeräts bestromt wird. Die zweite Betriebseinstellung kann einer jeweiligen Betriebsart zugeordnet sein und eine physikalische Größe beschreiben. Die Zuordnung kann beispielsweise darin bestehen, dass die physikalische Größe die jeweilige Betriebsart näher kennzeichnet. Handelt es sich bei den Betriebsarten beispielsweise um mehrere Heizarten eines als Gargerät ausgebildeten Haushaltsgeräts, so kann die physikalische Größe eine Temperatur sein, bei welcher das Gargerät heizt. Eine jeweilige Heizart definiert dabei wie die Hitze zugeführt wird, beispielsweise "Oberhitze" oder "Unterhitze".

Gemäß einer anderen Ausführungsform ist das Haushaltsgerät als Espressovollautomat ausgebildet. Hier beschreiben die ersten Betriebseinstellungen Standardgetränke bzw. individuelle Getränkepositionen. Wird beispielsweise die erste Betriebseinstellung "Standardgetränke" gewählt, so weisen die zweiten Betriebseinstellungen die Positionen "Espresso", "Latte Macchiato", "Capuccino" usw. auf.

Gemäß einer weiteren Ausführungsform beschreiben die ersten Betriebseinstellungen eine erste physikalische Größe und die zweiten Betriebseinstellungen eine zweite physikalische Größe. Dies bietet sich besonders dann an, wenn die Auswahl einer bestimmten Betriebsart von vornherein ausgeschlossen ist, wie das beispielsweise bei einem als Mikrowelle ausgebildeten Haushaltsgerät der Fall sein kann.

Das Haushaltsgerät ist beispielsweise als Mikrowellenherd oder Mikrowellenbackofen ausgebildet. Die erste physikalische Größe ist eine Leistung des Mikrowellenherds oder Mikrowellenbackofens. Die zweite physikalische Größe ist eine Zeitspanne, während derer der Mikrowellenherd oder Mikrowellenbackofen die Leistung abgibt. Die Leistung und Zeitspanne sind mittels des ersten bzw. zweiten Bedienelements einstellbar und werden benutzt, um das Magnetron des Mikrowellenherds oder Mikrowellenbackofens entsprechend anzusteuern.

Gemäß einer weiteren Ausführungsform beschreiben in einem ersten Betriebsmodus des Haushaltsgeräts die ersten Betriebseinstellungen eine erste physikalische Größe. Die zweiten Betriebseinstellungen beschreiben in dem ersten Betriebsmodus eine zweite physikalische Größe. In einem zweiten Betriebsmodus des Haushaltsgeräts beschreiben die ersten Betriebseinstellungen mehrere Betriebsarten des Haushaltsgeräts. Die zweiten Betriebseinstellungen sind einer jeweiligen Betriebsart zugeordnet und beschreiben eine physikalische Größe. Das Haushaltsgerät ist mittels Betätigens des ersten oder zweiten Bedienelements zwischen dem ersten und zweiten Betriebsmodus umschaltbar. Dadurch kann eine Durchgängigkeit bzw. Gleichartigkeit der Bedienung auch bei Haushalt-Kombigeräten erzielt werden. Solche Kombigeräte vereinen beispielsweise die Funktion eines Backofens mit denen eines Mikrowellengeräts.

Gemäß einer weiteren Ausführungsform ist das Haushaltsgerät als ein Mikrowellenbackofen ausgebildet. Der erste Betriebsmodus ist ein Mikrowellenmodus und der zweite Betriebsmodus ist ein Backofenmodus des Mikrowellenbackofens. In dem Mikrowellenmodus ist die erste physikalische Größe eine Leistung des Mikrowellenbackofens und die zweite physikalische Größe eine Zeitspanne, während derer der Mikrowellenbackofen die Leistung abgibt. In dem Backofenmodus umfassen die Betriebsarten mehrere Heizarten und die physikalische Größe ist eine Temperatur, bei welcher der Mikrowellenbackofen heizt. Somit kann einfach zwischen den verschiedenen Betriebsmodi eines Mikrowellenbackofens umgeschaltet werden, ohne dass eine gleichartige Bedienbarkeit verloren gehen würde.

Der Bildschirm ist beispielsweise als ein TFT ("Thin Film Transistor")-Bildschirm ausgebildet. Der Bildschirm kann darüber hinaus auch als Touchscreen ausgebildet sein. Das erste und/oder zweite Bedienelement können als Drehwähler ausgebildet sein. Weiterhin kann der Drehwähler als mechanischer Drehwähler ausgebildet sein. Alternativ kann das Bedienelement, insbesondere ein Drehwähler, in Form von Softkeys auf dem Touchscreen ausgebildet sein. Das Betätigen des ersten oder zweiten Bedienelements zum Umschalten zwischen dem ersten und zweiten Betriebsmodus umfasst beispielsweise das Drehen eines ersten Drehwählers.

Gemäß einer Ausführungsform umfasst die Betätigung des ersten und/oder zweiten Drehwählers eine Berührung und/oder ein Drehen desselben. Beispielsweise kann der erste und/oder zweite Drehwähler einen Sensor, insbesondere einen kapazitiven Sensor, aufweisen, welcher registriert, wenn der Benutzer den entsprechenden Drehwähler berührt.

Der erste Anzeigebereich, der zweite Anzeigebereich, das erste Bedienelement, das zweite Bedienelement und/oder das Steuergerät können in ein Bedienmodul integriert sein. Ein solches Bedienmodul lässt sich dann bei verschiedenen Haushaltsgerätetypen, beispielsweise bei einem Mikrowellenbackofen und einem Espressovollautomaten, gleichermaßen einsetzen.

Alternativ kann der Bildschirm an der Oberseite eines Kochfelds ausgebildet sein, während die Drehwähler an einer Frontseite desselben angeordnet sind.

Gemäß einer Ausführungsform kann eine Front- oder Oberseite des Haushaltsgeräts das Bedienmodul aufweisen. Somit ist das Bedienmodul gut zugänglich.

Weiterhin wird ein Verfahren zum Betreiben eines Haushaltsgeräts, insbesondere eines Gargeräts, bevorzugt des erfindungsgemäßen Haushaltsgeräts, vorgeschlagen. Dabei wird einem ersten Anzeigebereich zur Anzeige erster Betriebseinstellungen des Haushaltsgeräts eine erste flächige Ausdehnung und einem zweiten Anzeigebereich zur Anzeige zweiter Betriebseinstellungen des Haushaltsgeräts eine zweite flächige Ausdehnung zugewiesen, wenn ein Benutzer ein erstes Bedienelement zur Auswahl einer der ersten Betriebseinstellungen betätigt. Dem ersten Anzeigebereich wird eine dritte flächige Ausdehnung und dem zweiten Anzeigebereich eine vierte flächige Ausdehnung zugewiesen, wenn ein Benutzer ein zweites Bedienelement zur Auswahl einer der zweiten Betriebseinstellungen betätigt. Die dritte flächige Ausdehnung ist kleiner als die erste flächige Ausdehnung, und die vierte flächige Ausdehnung ist größer als die zweite flächige Ausdehnung.

Das Haushaltsgerät kann als ein Gargerät, insbesondere Backofen, Kochfeld, Mikrowellenbackofen, Mikrowellenherd, Mikrowelle, Dampfbackofen, Dampfgarofen, Doppelbackofen oder Espressovollautomat ausgebildet sein.

Die in Bezug auf das Haushaltsgerät beschriebenen Merkmale gelten für das Verfahren entsprechend, und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen des Haushaltsgeräts oder des Verfahrens. Dabei wird der Fachmann auch Einzelaspekte als Verbesserungen oder Ergänzungen zu der jeweiligen Grundform der Erfindung hinzufügen oder abändern.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Es zeigt dabei:
Fig. 1: ausschnittsweise ein Haushaltsgerät mit einem Bedienmodul gemäß einer vergleichsweise allgemein gehaltenen Ausführungsform;
Fig. 2: die Ansicht aus Fig. 1 nach einer Betätigung eines zweiten Bedienelements;
Fig. 3: ausschnittsweise einen Backofen mit einem Bedienmodul gemäß einer gegenüber Fig. 1 konkreteren Ausführungsform;
Fig. 4: die Ansicht aus Fig. 3 nach Betätigung eines ersten Bedienelements;
Fig. 5: die Ansicht aus Fig. 4 nach Betätigung eines zweiten Bedienelements; Fig. 6: die Ansicht aus Fig. 5 nach einem erneuten Betätigen des zweiten Bedienelements;
Fig. 7: ausschnittsweise einen Mikrowellenbackofen;
Fig. 8: die Ansicht aus Fig. 7 nach Betätigung des ersten Bedienelements;
Fig. 9: die Ansicht aus Fig. 6 vor Betätigung eines Timers;
Fig. 10: die Ansicht aus Fig. 9 nach Betätigung des Timers;
Fig. 11: die Ansicht aus Fig. 10, während der Timer herunterzählt; und
Fig. 12: die Ansicht aus Fig. 11, wenn der Timer einen vorbestimmten Schwellwert unterschreitet.

In den Figuren sind gleiche oder funktionsgleiche Elemente mit denselben Bezugszeichen versehen worden, sofern nichts anderes angegeben ist.

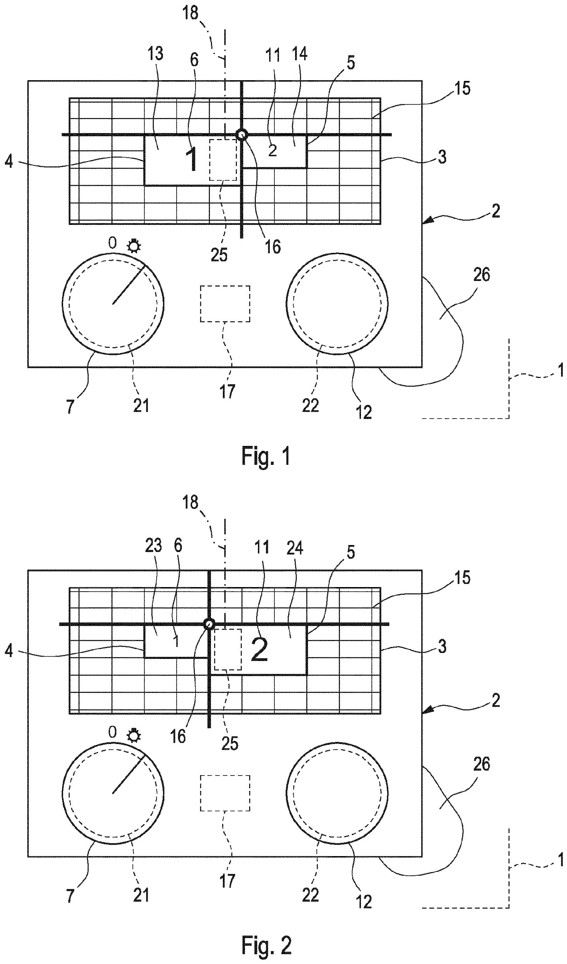

Fig. 1 zeigt ausschnittsweise ein Haushaltsgerät 1 mit einem Bedienmodul 2 gemäß einem vergleichsweise allgemein gehaltenen Ausführungsbeispiel.

Das Bedienmodul 2 umfasst einen TFT-Bildschirm 3 mit einem ersten Anzeigebereich 4 und einem zweiten Anzeigebereich 5.

In dem ersten Anzeigebereich 4 sind erste Betriebseinstellungen des Haushaltsgeräts 1 anzeigbar. Gemäß dem Ausführungsbeispiel wird jedoch in dem ersten Anzeigebereich 4 nur eine von mehreren ersten Betriebseinstellungen angezeigt. In Fig. 1 ist zur Verdeutlichung der Allgemeingültigkeit in dem ersten Anzeigebereich 4 die Ziffer "1" dargestellt und bezeichnet eine erste Betriebseinstellung 6 des Haushaltsgeräts.

Das Bedienmodul 2 weist weiterhin einen ersten, mechanischen Drehwähler 7 auf. Durch Drehen des Drehwählers 7 im Uhrzeigersinn aus seiner mit "0" bezeichneten "Aus"-Position, in der das Haushaltsgerät 1 ausgeschaltet oder in einem Stand-By-Zustand ist, kann der Drehwähler 7 in eine "Licht-An"-Position bewegt werden, in welcher ein dem Haushaltsgerät 1 zugeordnetes Licht, beispielsweise in einem Garraum desselben, eingeschaltet wird. Wird der Drehwähler 7 nun im Uhrzeigersinn weiter gedreht, so lassen sich die verschiedenen Betriebseinstellungen 6 in dem ersten Anzeigebereich 4 anzeigen. Durch Drehen des ersten Drehwählers im Uhrzeigersinn wird dabei durch die verschiedenen ersten Betriebseinstellungen 6 durchgewechselt, wobei immer nur jeweils eine Betriebseinstellung 6 in dem ersten Anzeigebereich 4 angezeigt wird.

In dem zweiten Anzeigebereich 5 sind zweite Betriebseinstellungen des Haushaltsgeräts anzeigbar. Gemäß dem Ausführungsbeispiel wird in dem zweiten Anzeigebereich 5 immer nur jeweils eine von mehreren zweiten Betriebseinstellungen 11 angezeigt. Eine solche zweite Betriebseinstellung 11 soll zur Verdeutlichung der Allgemeingültigkeit durch die Ziffer "2" in Fig. 1 veranschaulicht werden.

Das Bedienmodul 2 umfasst ferner einen zweiten, mechanischen Drehwähler 12. Mittels Drehens des zweiten Drehwählers 12, beispielsweise im Uhrzeigersinn, werden in dem zweiten Anzeigebereich 5 die verschiedenen zweiten Betriebseinstellungen 11 angezeigt, wobei immer nur jeweils eine solche zweite Betriebseinstellung 11 angezeigt wird.

Gemäß dem Ausführungsbeispiel weist der erste Anzeigebereich 4 eine erste flächige Ausdehnung 13 und der zweite Anzeigebereich 5 eine zweite flächige Ausdehnung 14 auf, wobei die erste flächige Ausdehnung 13 größer als die zweite flächige Ausdehnung 14 ist. Entsprechend wird auch die erste Betriebseinstellung 6 größer dargestellt als die zweite Betriebseinstellung 11.

Der erste Anzeigebereich 4 und der zweite Anzeigebereich 5 sind gemäß dem Ausführungsbeispiel jeweils rechtecksförmig ausgebildet und an einem Raster 15 ausgerichtet. Die rechte obere Ecke des ersten Anzeigebereichs 4 und die linke obere Ecke des zweiten Anzeigebereichs 5 liegen dabei jeweils auf demselben Referenzpunkt 16.

Das Bedienmodul 2 weist weiterhin eine Steuereinrichtung 17 auf. Die Steuereinrichtung 17 ist signaltechnisch mit einem ersten Berührungssensor 21 und einem zweiten Berührungssensor 22 verbunden. Der erste Berührungssensor 21 ist in den ersten Drehwähler 7 integriert und registriert, wenn eine Benutzerhand den ersten Drehwähler 7 berührt. Entsprechend ist der zweite Berührungssensor 22 in dem zweiten Drehwähler 12 integriert und registriert, wenn die Benutzerhand den zweiten Drehwähler 12 berührt.

Sobald die Benutzerhand den ersten Drehwähler 7 berührt, weist die Steuereinrichtung 17 dem ersten Anzeigebereich 4 die erste flächige Ausdehnung 13 zu. Dies setzt voraus, dass sich der Drehwähler 7 bereits in einer Position befindet, welche einer der ersten Betriebseinstellungen zugeordnet ist, sich also nicht beispielsweise in der "Aus"-Position befindet. Gleichzeitig weist die Steuereinrichtung 17 dem zweiten Anzeigebereich 5 die zweite flächige Ausdehnung 14 zu. Die Steuereinrichtung 17 nimmt diese Zuweisung auch dann vor, wenn der Drehwähler 7 über die "Licht-An"-Position im Uhrzeigersinn hinaus bewegt wird.

Durch Weiterdrehen kann der Benutzer nun die gewünschte erste Betriebseinstellung 6 auswählen. Die erste Betriebseinstellung 6 wird größer dargestellt als die zweite Betriebseinstellung 11, siehe Fig. 1. Wird die gewünschte erste Betriebseinstellung 6 angezeigt, so wechselt die Benutzerhand auf den zweiten Drehwähler 12, um eine zweite Betriebseinstellung 11 aus den mehreren zweiten Betriebseinstellungen 11 auszuwählen. Sobald die Benutzerhand den zweiten Drehwähler 12 berührt, weist die Steuereinrichtung 17 dem ersten Anzeigebereich 4 eine dritte flächige Ausdehnung 23 und dem zweiten Anzeigebereich 5 eine vierte flächige Ausdehnung 24 zu. Die dritte flächige Ausdehnung 23 ist kleiner als die erste flächige Ausdehnung 13. Weiterhin ist die vierte flächige Ausdehnung 24 größer als die zweite flächige Ausdehnung 14. Entsprechend wird die erste Betriebseinstellung 6 kleiner dargestellt als dies noch in dem in Fig. 1 gezeigten Zustand vor Berührung des zweiten Drehwählers 12 der Fall war. Außerdem ist die zweite Betriebseinstellung 11 in dem in Fig. 2 gezeigten Zustand nach Betätigung des Drehwählers 12 größer dargestellt als dies noch in dem in Fig. 1 gezeigten Zustand vor Berührung des zweiten Drehwählers 12 der Fall war. Weiterhin wird die zweite Betriebseinstellung 11 in dem in Fig. 2 gezeigten Zustand nach Berührung des zweiten Drehwählers 12 größer dargestellt als die erste Betriebseinstellung 6. Die in einem jeweiligen Anzeigebereich 4, 5 dargestellte Betriebseinstellung 6, 11 skaliert automatisch mit der Vergrößerung bzw. Verkleinerung des jeweiligen Anzeigebereichs 4, 5.

Wird nun der zweite Drehwähler 12 beispielsweise im Uhrzeigersinn gedreht, so werden in dem zweiten Anzeigebereich 5 die verschiedenen zweiten Betriebseinstellungen 11 dargestellt, wobei jeweils nur eine angezeigt wird.

Erfolgt nun keine weitere Betätigung der Drehwähler 7, 12, so wird das Haushaltsgerät 1, beispielsweise ein Garraum desselben, mit der ersten ausgewählten (angezeigten) Betriebseinstellung 6 und der zweiten, ausgewählten (angezeigten) Betriebseinstellung 11 von der Steuereinrichtung 17 angesteuert.

Außerdem verschiebt die Steuereinrichtung 17 den Referenzpunkt 16 gemäß dem Ausführungsbeispiel nach links, so dass der erste und zweite Anzeigebereich 4, 5 nach links verschoben werden. Dadurch wird der zweite Anzeigebereich 5 mehr zur Mitte 18 des Bildschirms 3 und damit in die Mitte des Gesichtsfelds des Betrachters verschoben. Außerdem ist anhand eines Vergleichs der Figuren 1 und 2 zu erkennen, dass der erste Anzeigebereich 4 in seiner ersten flächigen Ausdehnung 13 einen Bereich 25 aufweist, welcher mit dem zweiten Anzeigebereich 5 in seiner vierten flächigen Ausdehnung 24 überlappt.

Das Bedienmodul 2 kann beispielsweise in eine Frontseite 26, siehe Fig. 1, integriert sein.

Der Bildschirm 3, die Drehwähler 7, 12 und die Steuereinrichtung 17 müssen nicht in einem Bedienmodul 2 zusammengefasst sein, sondern können auch separat in das Haushaltsgerät 1 integriert sein.

Bei dem Haushaltsgerät 1 kann es sich um ein Gargerät, insbesondere einen Backofen, einen Mikrowellenbackofen, eine Mikrowelle, einen Dampfbackofen, einen Dampfgarofen oder Doppelbackofen, oder einen Kaffeevollautomat, insbesondere Espressovollautomat, handeln. Bei diesen Haushaltsgeräten ist das vorstehend beschriebene Bedienmodul 2 gleichermaßen anwendbar.

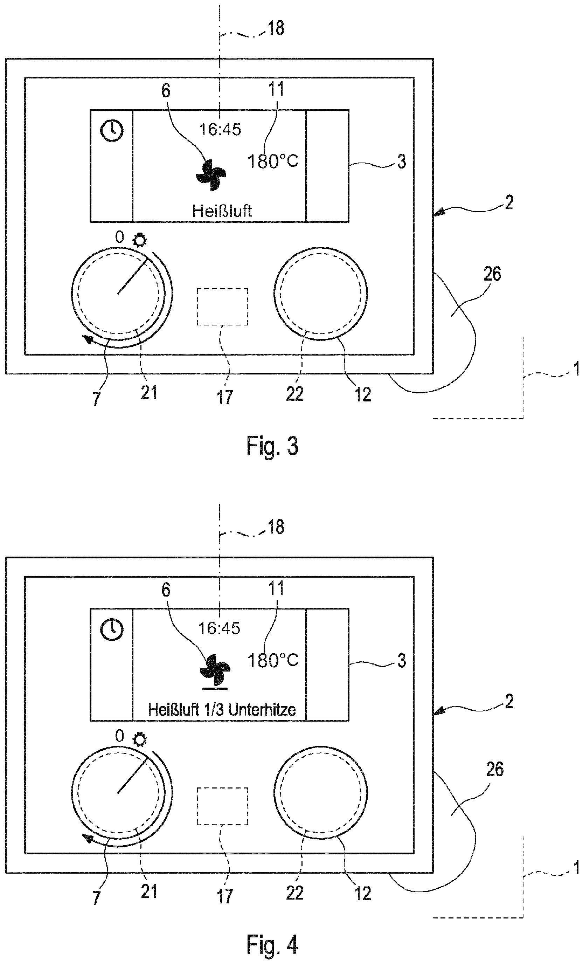

Nachfolgend wird eine Anwendung des Bedienmoduls 2 bei einem Backofen mit Bezug auf die Figuren 3 bis 6 näher beschrieben.

Mittels Betätigens des ersten Drehwählers 7 in Fig. 3 im Uhrzeigersinn (siehe Pfeil) werden verschiedene erste Betriebseinstellungen 6 in Form von Heizarten des Backofens angezeigt. So heißt es beispielsweise in Fig. 3 "Heißluft", während es in Fig. 4 "Heißluft 1/3 Unterhitze" heißt. Auch das entsprechende Symbol ist in Fig. 4 gegenüber Fig. 3 verändert.

Die zweite Betriebseinstellung 11 in Form einer Temperatur, mit welcher der Backofen betrieben wird, bleibt dabei unverändert, beispielsweise bei "180°", wie in den Figuren 3 und 4 dargestellt.

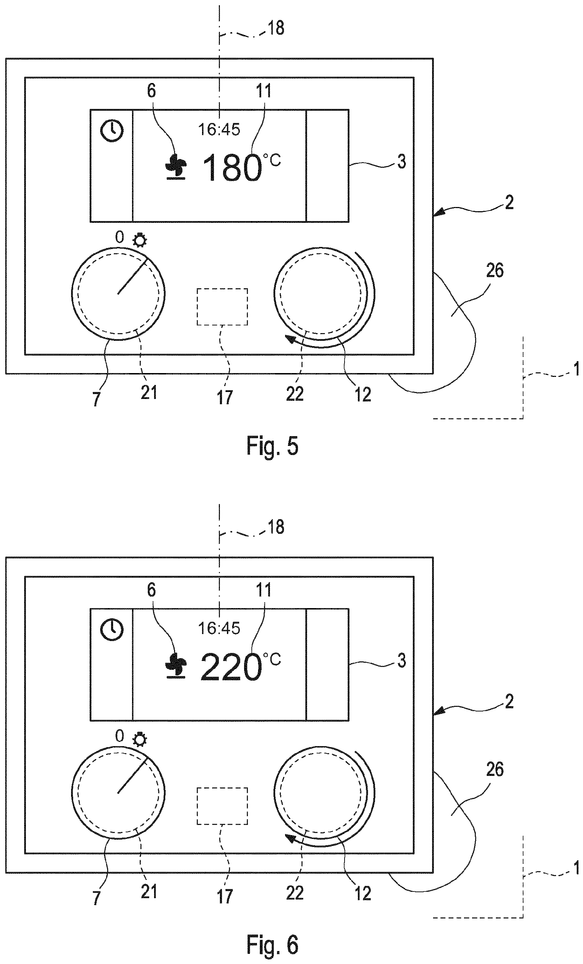

Wechselt die Benutzerhand nun zu dem zweiten Drehwähler 12, wird bei Berührung desselben oder, je nach Ausführungsform, erst bei einem Drehen desselben die Temperatur 11 groß und zur Mitte 18 des Bildschirms 3 hin verschoben dargestellt. Entsprechend wird die Heizart 6 verkleinert und aus der Mitte 18 heraus, in dem vorliegenden Fall nach links, verschoben dargestellt. Wird nun der zweite Drehwähler 12 im Uhrzeigersinn (siehe Pfeil) gedreht, so kann der Benutzer die Temperatur 11 verringern oder erhöhen, wie in Fig. 6 dargestellt. So wird gemäß dem Ausführungsbeispiel die Temperatur 11 von "180°" auf "220°" erhöht.

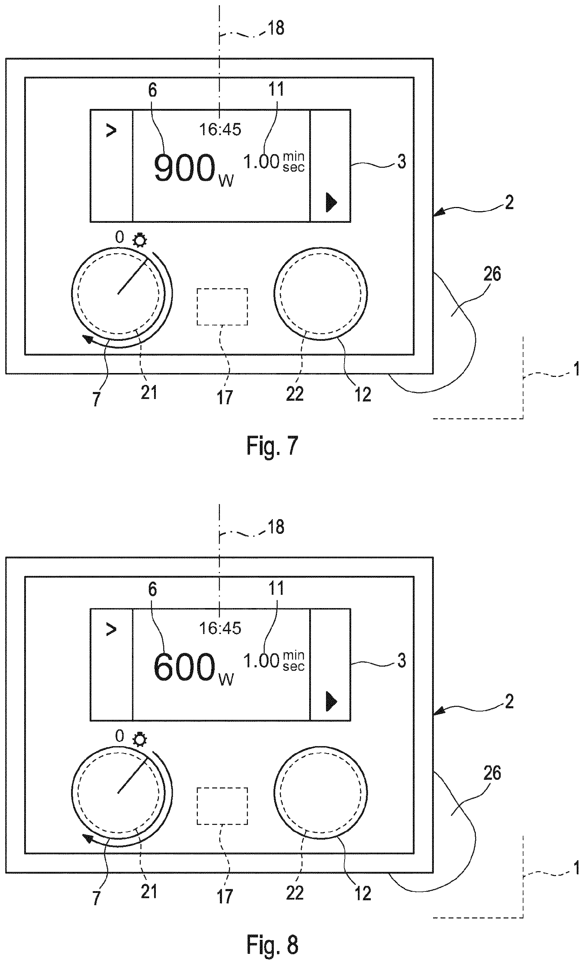

Mit Bezug auf die Figuren 7 und 8 wird eine Anwendung des Bedienmoduls 2 bei einem Haushaltsgeräts 1 in Form eines Mikrowellenbackofens erläutert. Dabei wird lediglich auf die Unterschiede gegenüber dem Ausführungsbeispiel nach den Figuren 3 bis 6 eingegangen.

Als erste Betriebseinstellung 6 wird eine Leistung in beispielsweise Watt angezeigt, mit welcher ein in den Mikrowellenbackofen 1 integrierter Magnetron betrieben wird. Wird der Drehwähler 7 im Uhrzeigersinn betätigt, so verringert sich die angezeigte Wattzahl 6. So verringert sich beispielsweise die angezeigte Leistung in den Figuren 7 und 8 von "900" Watt auf "600" Watt. Ist die gewünschte Wattzahl 6 eingestellt, so wechselt die Benutzerhand zu dem zweiten Drehwähler 12. Allein durch Berühren oder, je nach Ausführungsform, durch Drehen desselben wird dann eine zweite Betriebseinstellung 11 in Form einer Zeit, im vorliegenden Ausführungsbeispiel "1.00" Minuten, vergrößert und zur Mitte 18 hin gerückt dargestellt, während die Wattzahl 6 verkleinert und aus der Mitte 18 nach links herausgerückt und verkleinert dargestellt wird. Dies ist in keiner der Figuren gezeigt, entspricht jedoch der Darstellung aus Fig. 6.

Der Mikrowellenbackofen 1 umfasst einen ersten Betriebsmodus, in welchem dieser als Mikrowellengerät betreibbar ist, und einen zweiten Betriebsmodus, in welchem dieser als Backofen betreibbar ist. Die Figuren 3-6 zeigen dabei den Backofenmodus, während die Figuren 7 und 8 den Mikrowellenmodus illustrieren.

Wird in Fig. 8 der erste Drehwähler 7 weiter im Uhrzeigersinn gedreht, so wechselt der Mikrowellenbackofen 1 aus dem in den Fig. 7 und 8 gezeigten Mikrowellenmodus in den in den Fig. 3 bis 6 gezeigten Backofenmodus. Mittels des ersten Drehwählers 7 sind dann die verschiedenen Heizarten auswählbar, während mittels des zweiten Drehwählers 12 die Temperatur 11 auswählbar ist. Folglich lässt sich der Mikrowellenbackofen 1 in dem Mikrowellenmodus und in dem Backofenmodus gleichartig bedienen.

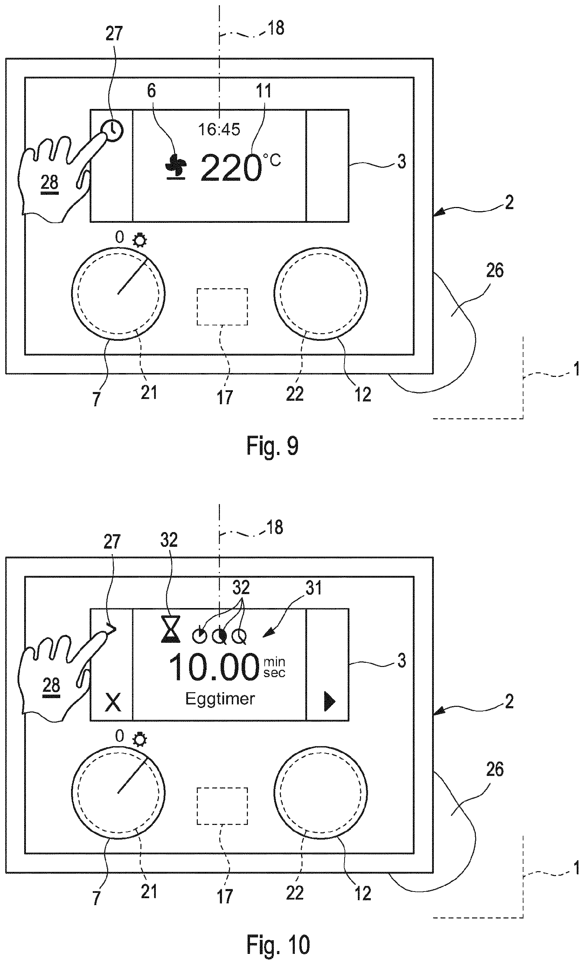

Fig. 9 zeigt, wie durch Betätigen eines Softkeys 27 auf dem Bildschirm 3 durch die Benutzerhand 28 aus dem in Fig. 6 gezeigten Zustand ein Timermenü 31 (siehe Fig. 10) auf dem Bildschirm 3 aufgerufen werden kann. Mittels Betätigens des Softkeys 27 kann zwischen unterschiedlichen Timereinstellungen 32 ausgewählt werden, wobei die jeweils ausgewählte Timereinstellung 32 gegenüber den anderen Timereinstellungen 32 vergrößert dargestellt wird. So ist in Fig. 10 die Sanduhr gegenüber den anderen Symbolen vergrößert gezeigt.

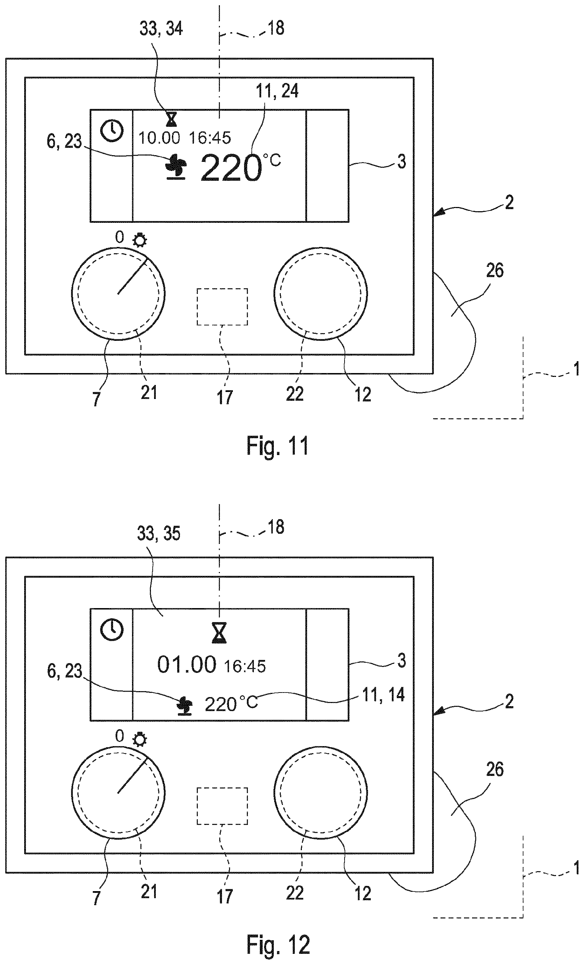

In Fig. 11 ist die verbleibende Timerzeit in einem weiteren Anzeigebereich 33 des Bildschirms 3 dargestellt. Wie aus einem Vergleich der Figuren 11 und 12 erkennbar, weist der Anzeigebereich 33 in dem in Fig. 11 gezeigten Zustand eine erste flächige Ausdehnung 34 und in dem in Fig. 12 gezeigten Zustand eine zweite flächige Ausdehnung 35 auf. Die zweite flächige Ausdehnung 35 ist dabei größer als die erste flächige Ausdehnung 34. Außerdem ist in dem in Fig. 11 gezeigten Zustand die Temperatur 11 noch mit ihrer großen, vierten flächigen Ausdehnung 24 dargestellt, während die Heizart 6 mit ihrer verkleinerten zweiten flächigen Ausdehnung 23 gezeigt ist. In dem Zustand in Fig. 12 ist dann die Heizart 6 und die Temperatur 11 nach unten gerückt auf dem Bildschirm 3 dargestellt, wobei außerdem die Temperatur 11 ihre zweite flächige Ausdehnung 14 aufweist. Die Zuweisung der jeweiligen Flächenausdehnungen 14, 23, 24, 34, 35 aus dem in Fig. 11 gezeigten Zustand zu dem in Fig. 12 gezeigten Zustand geschieht durch die Steuereinrichtung 17 und erfolgt, wenn die verbleibende Zeit gleich oder kleiner einem vorbestimmten Schwellwert ist, beispielsweise im vorliegenden Fall "1.00" Minuten.

Die gemäß dem Ausführungsbeispiel mechanisch ausgebildeten Drehwähler 7, 12 könnten beispielsweise auch als Teil des Bildschirms 3 ausgebildet sein, welcher in diesem Fall zumindest bereichsweise als Touchscreen ausgebildet ist. Die Drehwähler 7, 12 wären in diesem Fall als sogenannte Softkeys ausgebildet. In dem Fall, dass ein Betätigen des ersten und zweiten Drehwählers 7, 12 nicht bereits durch Berührung sondern erst durch Drehen derselben vorgesehen ist, sind die Berührungssensoren 21, 22 nicht erforderlich.

### Verwendete Bezugszeichen:

- 1: Haushaltsgerät
- 2: Bedienmodul
- 3: Bildschirm
- 4: erster Anzeigebereich
- 5: zweiter Anzeigebereich
- 6: erste Betriebseinstellung
- 7: erster Drehwähler
- 11: zweite Betriebseinstellung
- 12: zweiter Drehwähler
- 13: erste flächige Ausdehnung
- 14: zweite flächige Ausdehnung
- 15: Raster
- 16: Referenzpunkt
- 17: Steuereinrichtung
- 18: Mitte
- 21: erster Berührungssensor
- 22: zweiter Berührungssensor
- 23: dritte flächige Ausdehnung
- 24: vierte flächige Ausdehnung
- 25: Bereich
- 26: Frontseite
- 27: Softkey
- 28: Hand
- 31: Timermenü
- 32: Timereinstellung
- 33: Anzeigebereich
- 34: erste flächige Ausdehnung
- 35: zweite flächige Ausdehnung

## Patentansprüche

1. Haushaltsgerät (1), insbesondere Gargerät, mit einem ersten Anzeigebereich (4) zur Anzeige erster Betriebseinstellungen (6) des Haushaltsgeräts (1), einem ersten Bedienelement (7) zur Auswahl einer der ersten Betriebseinstellungen (6), einem zweiten Anzeigebereich (5) zur Anzeige zweiter Betriebseinstellungen (11) des Haushaltsgeräts (1), einem zweiten Bedienelement (12) zur Auswahl einer der zweiten Betriebseinstellungen (11) und einer Steuereinrichtung (17), welche dazu eingerichtet ist, bei einer Betätigung des ersten Bedienelements (7) durch einen Benutzer dem ersten Anzeigebereich (4) eine erste flächige Ausdehnung (13) und dem zweiten Anzeigebereich (5) eine zweite flächige Ausdehnung (14) zuzuweisen und bei einer Betätigung des zweiten Bedienelements (12) durch den Benutzer dem ersten Anzeigebereich (4) eine dritte flächige Ausdehnung (23) und dem zweiten Anzeigebereich (5) eine vierte flächige Ausdehnung (24) zuzuweisen, wobei die dritte flächige Ausdehnung (23) kleiner als die erste flächige Ausdehnung (13) und die vierte flächige Ausdehnung (24) größer als die zweite flächige Ausdehnung (14) ist, wobei ein Bildschirm (3) vorgesehen ist, welcher den ersten und zweiten Anzeigebereich (4, 5) aufweist, und wobei die Steuereinrichtung (17) dazu ausgerichtet ist, die beiden Anzeigebereiche (4, 5) auf dem Bildschirm (3) zu verschieben, wenn der Benutzer zunächst das eine und dann das andere Bedienelement (7, 12) bestätigt, **dadurch gekennzeichnet, dass** die beiden Anzeigebereiche (4, 5) jeweils einen Referenzpunkt (16) aufweisen und die Referenzpunkte (16) vor und nach dem Verschieben denselben Abstand zueinander aufweisen, wobei der erste Anzeigebereich (4) und der zweite Anzeigebereich (5) jeweils rechtecksförmig ausgebildet und an einem Raster (15) ausgerichtet sind, wobei die rechte obere Ecke des ersten Anzeigebereichs (4) und die linke obere Ecke des zweiten Anzeigebereichs (5) jeweils auf demselben Referenzpunkt (16) liegen, wobei die Steuereinrichtung (17) dazu eingerichtet ist, beim Verschieben der beiden Anzeigebereiche (4, 5) den Referenzpunkt (16) zu verschieben.

2. Haushaltsgerät nach Anspruch 1, **dadurch gekennzeichnet, dass** sich der erste Anzeigebereich (4) in seiner ersten flächigen Ausdehnung (13) und der zweite Anzeigebereich (5) in seiner vierten flächigen Ausdehnung (24) überlappen.

3. Haushaltsgerät nach einem der Ansprüche 1 - 2, **dadurch gekennzeichnet, dass** die ersten Betriebseinstellungen (6) mehrere Betriebsarten des Haushaltsgeräts (1) beschreiben und dass die zweiten Betriebseinstellungen (11) einer jeweiligen Betriebsart zugeordnet sind und eine physikalische Größe beschreiben.

4. Haushaltsgerät nach Anspruch 3, **dadurch gekennzeichnet, dass** das Haushaltsgerät (1) als Gargerät ausgebildet ist und dass die Betriebsarten (6) mehrere Heizarten des Gargeräts umfassen und die physikalischen Größe (11) eine Temperatur ist, bei welcher das Gargerät heizt.

5. Haushaltsgerät nach einem der Ansprüche 1 - 2, **dadurch gekennzeichnet, dass** die ersten Betriebseinstellungen (6) eine erste physikalische Größe und die zweiten Betriebseinstellungen (11) eine zweite physikalische Größe beschreiben.

6. Haushaltsgerät nach Anspruch 5, **dadurch gekennzeichnet, dass** das Haushaltsgerät (1) als Mikrowellenherd oder Mikrowellenbackofen ausgebildet ist und dass die erste physikalische Größe (6) eine Leistung des Mikrowellenherds oder Mikrowellenbackofens und die zweite physikalische Größe (11) eine Zeitspanne ist, während derer der Mikrowellenherd oder der Mikrowellenbackofen die Leistung abgibt.

7. Haushaltsgerät nach einem der Ansprüche 1 - 2, **dadurch gekennzeichnet, dass** in einem ersten Betriebsmodus des Haushaltsgeräts (1) die ersten Betriebseinstellungen (6) eine erste physikalische Größe und die zweiten Betriebseinstellungen (11) eine zweite physikalische Größe beschreiben und dass in einem zweiten Betriebsmodus des Haushaltsgeräts (1) die ersten Betriebseinstellungen (6) mehrere Betriebsarten des Haushaltsgeräts (1) beschreiben und dass die zweiten Betriebseinstellungen (11) einer jeweiligen Betriebsart zugeordnet sind und eine physikalische Größe beschreiben und dass das Haushaltsgerät (1) mittels Betätigens des ersten oder zweiten Bedienelements (7, 12) zwischen dem ersten und zweiten Betriebsmodus umschaltbar ist.

8. Haushaltsgerät nach Anspruch 7, **dadurch gekennzeichnet, dass** das Haushaltsgerät (1) als ein Mikrowellenbackofen ausgebildet ist und der erste Betriebsmodus ein Mikrowellenmodus und der zweite Betriebsmodus ein Backofenmodus des Mikrowellenbackofens ist und dass in dem Mikrowellenmodus die erste physikalische Größe (6) eine Leistung des Mikrowellenbackofens und die zweite physikalische Größe (11) eine Zeitspanne ist, während derer der Mikrowellenbackofen die Leistung abgibt, und dass in dem Backofenmodus die Betriebsarten (6) mehrere Heizarten umfassen und die physikalischen Größe (11) eine Temperatur ist, bei welcher der Mikrowellenbackofen heizt.

9. Haushaltsgeräts nach einem der vorhergehenden Ansprüche 1 - 8, **dadurch gekennzeichnet, dass** der Bildschirm (3) als ein TFT-Bildschirm und/oder das erste und/oder zweite Bedienelement (7, 12) als ein Drehwähler ausgebildet ist.

10. Haushaltsgerät nach Anspruch 9, **dadurch gekennzeichnet, dass** die Betätigung des ersten und/oder zweiten Drehwählers (7, 12) eine Berührung und/oder ein Drehen desselben umfasst.

11. Haushaltsgerät nach einem der Ansprüche 1 - 10, **dadurch gekennzeichnet, dass** der erste Anzeigebereich (4), der zweite Anzeigebereich (5), das erste Bedienelement (7), das zweite Bedienelement (12) und/oder das Steuergerät (17) in ein Bedienmodul (2) integriert sind.

12. Haushaltsgerät nach Anspruch 11, **dadurch gekennzeichnet, dass** eine Front- oder Oberseite (26) des Haushaltsgeräts (1) das Bedienmodul (2) aufweist.

13. Verfahren zum Betreiben eines Haushaltsgeräts (1), insbesondere eines Gargeräts, bevorzugt eines Haushaltsgeräts nach einem der Ansprüche 1- 14, wobei einem ersten Anzeigebereich (4) zur Anzeige erster Betriebseinstellungen (6) des Haushaltsgeräts (1) eine erste flächige Ausdehnung (13) und einem zweiten Anzeigebereich (5) zur Anzeige zweiter Betriebseinstellungen (11) des Haushaltsgeräts (1) eine zweite flächige Ausdehnung (14) zugewiesen wird, wenn ein Benutzer ein erstes Bedienelement (7) zur Auswahl einer der ersten Betriebseinstellungen (6) betätigt, und wobei dem ersten Anzeigebereich (4) eine dritte flächige Ausdehnung (23) und dem zweiten Anzeigebereich (5) eine vierte flächige Ausdehnung (24) zugewiesen wird, wenn der Benutzer ein zweites Bedienelement (12) zur Auswahl einer der zweiten Betriebseinstellungen (11) betätigt, wobei die dritte flächige Ausdehnung (23) kleiner als die erste flächige Ausdehnung (13) und die vierte flächige Ausdehnung (24) größer als die zweite flächige Ausdehnung (14) ist, wobei die beiden Anzeigebereiche (4, 5) auf einem Bildschirm (3), welcher den ersten und zweiten Anzeigebereich (4, 5) aufweist, verschoben werden, wenn der Benutzer zunächst das eine und dann das andere Bedienelement (7, 12) betätigt, **dadurch gekennzeichnet, dass** die beiden Anzeigebereiche (4, 5) jeweils einen Referenzpunkt (16) aufweisen und die Referenzpunkte (16) vor und nach dem Verschieben denselben Abstand zueinander aufweisen, wobei der erste Anzeigebereich (4) und der zweite Anzeigebereich (5) jeweils rechtecksförmig ausgebildet und an einem Raster (15) ausgerichtet sind, wobei die rechte obere Ecke des ersten Anzeigebereichs (4) und die linke obere Ecke des zweiten Anzeigebereichs (5) jeweils auf demselben Referenzpunkt (16) liegen, wobei beim Verschieben der beiden Anzeigebereiche (4, 5) der Referenzpunkt (16) verschoben wird.

## Claims

1. Domestic appliance (1), in particular a cooking appliance, with a first display region (4) for displaying first operating settings (6) of the domestic appliance (1), a first operating element (7) for selecting one of the first operating settings (6), a second display region (5) for displaying second operating settings (11) of the domestic appliance (1), a second operating element (12) for selecting one of the second operating settings (11) and a control facility (17), which is designed to allocate a first two-dimensional extent (13) to the first display region (4) and a second two-dimensional extent (14) to the second display region (5) when the user actuates the first operating element (7) and to allocate a third two-dimensional extent (23) to the first display region (4) and a fourth two-dimensional extent (24) to the second display region (5) when the user actuates the second operating element (12), wherein the third two-dimensional extent (23) is smaller than the first two-dimensional extent (13) and the fourth two-dimensional extent (24) is larger than the second two-dimensional extent (14), wherein a screen (3) is provided, which comprises the first and second display region (4, 5), and wherein the control facility (17) is designed to move the two display regions (4, 5) on the screen (3) when the user actuates first one operating element (7, 12) and then the other,
**characterised in that** the two display regions (4, 5) each have a reference point (16) and the reference points (16) are at the same distance from one another before and after movement, wherein the first display region (4) and the second display region (5) are each configured as rectangular and aligned on a grid (15), wherein the top right corner of the first display region (4) and the top left corner of the second display region (5) are each located on the same reference point (16), wherein the control facility (17) is configured to move the reference point (16) when moving the two display regions (4, 5).

2. Domestic appliance according to claim 1, **characterised in that** the first two-dimensional extent (13) of the first display region (4) and the fourth two-dimensional extent (24) of the second display region (5) overlap.

3. Domestic appliance according to one of claims 1 - 2, **characterised in that** the first operating settings (6) describe a number of operating modes of the domestic appliance (1) and the second operating settings (11) are assigned to a respective operating mode and describe a physical variable.

4. Domestic appliance according to claim 3, **characterised in that** the domestic appliance (1) is configured as a cooking appliance and the operating modes (6) comprise a number of heating modes of the cooking appliance and the physical variable (11) is a temperature at which the cooking appliance heats.

5. Domestic appliance according to one of claims 1 - 2, **characterised in that** the first operating settings (6) describe a first physical variable and the second operating settings (11) describe a second physical variable.

6. Domestic appliance according to claim 5, **characterised in that** the domestic appliance (1) is configured as a microwave oven or combined microwave and conventional oven and the first physical variable (6) is a power of the microwave oven or combined microwave and conventional oven and the second physical variable (11) is a time period during which the microwave oven or combined microwave and conventional oven emits the power.

7. Domestic appliance according to one of claims 1 - 2, **characterised in that** in a first operating mode of the domestic appliance (1) the first operating settings (6) describe a first physical variable and the second operating settings (11) describe a second physical variable and in a second operating mode of the domestic appliance (1) the first operating settings (6) describe a number of operating modes of the domestic appliance (1) and the second operating settings (11) are assigned to a respective operating mode and describe a physical variable and the domestic appliance (1) can be switched between the first and second operating mode by actuation of the first or second operating element (7, 12).

8. Domestic appliance according to claim 7, **characterised in that** the domestic appliance (1) is configured as a combined microwave and conventional oven and the first operating mode is a microwave mode and the second operating mode is a conventional oven mode of the combined microwave and conventional oven and in microwave mode the first physical variable (6) is a power of the combined microwave and conventional oven and the second physical variable (11) is a time period during which the combined microwave and conventional oven emits the power and in conventional oven mode the operating modes (6) comprise a number of heating modes and the physical variable (11) is a temperature at which the combined microwave and conventional oven heats.

9. Domestic appliance according to one of the preceding claims 1 - 8, **characterised in that** the screen (3) is configured as a TFT screen and/or the first and/or second operating element (7, 12) is configured as a rotary selector.

10. Domestic appliance according to claim 9, **characterised in that** actuation of the first and/or second rotary selector (7, 12) comprises touching and/or rotating it.

11. Domestic appliance according to one of claims 1-10, **characterised in that** the first display region (4), the second display region (5), the first operating element (7), the second operating element (12) and/or the control device (17) are integrated in an operating module (2).

12. Domestic appliance according to claim 11, **characterised in that** a front or top face (26) of the domestic appliance (1) comprises the operating module (2).

13. Method for operating a domestic appliance (1), in particular a cooking appliance, preferably a domestic appliance according to one of claims 1-14, wherein a first two-dimensional extent (13) is allocated to a first display region (4) for displaying first operating settings (6) of the domestic appliance (1) and a second two-dimensional extent (14) is allocated to a second display region (5) for displaying second operating settings (11) of the domestic appliance (1), when a user actuates a first operating element (7) to select one of the first operating settings (6), and wherein a third two-dimensional extent (23) is allocated to the first display region (4) and a fourth two-dimensional extent (24) is allocated to the second display region (5), when the user actuates a second operating element (12) to select one of the second operating settings (11), wherein the third two-dimensional extent (23) is smaller than the first two-dimensional extent (13) and the fourth two-dimensional extent (24) is larger than the second two-dimensional extent (14), wherein the two display regions (4, 5) are moved on the screen (3), which has the first and second display regions (4, 5), when the user actuates first one operating element (7, 12) and then the other, **characterised in that** the two display regions (4, 5) each have a reference point (16) and the reference points (16) are at the same distance from one another before and after movement, wherein the first display region (4) and the second display region (5) are each configured as rectangular and aligned on a grid (15), wherein the top right corner of the first display region (4) and the top left corner of the second display region (5) are each located on the same reference point (16), wherein the reference point (16) is moved when moving the two display regions (4, 5).

## Revendications

1. Appareil ménager (1), notamment appareil de cuisson, comprenant une première zone d'affichage (4) pour l'affichage de premiers réglages de fonctionnement (6) de l'appareil ménager (1), comprenant un premier élément de commande (7) pour la sélection de l'un des premiers réglages de fonctionnement (6), une deuxième zone d'affichage (5) pour l'affichage de deuxièmes réglages de fonctionnement (11) de l'appareil ménager (1), un deuxième élément de commande (12) pour la sélection de l'un des deuxièmes réglages de fonctionnement (11), et un dispositif de commande (17) qui est configuré, lors d'un actionnement du premier élément de commande (7) par un utilisateur, pour attribuer à la première zone d'affichage (4) une première étendue de surface (13) et pour attribuer à la deuxième zone d'affichage (5) une deuxième étendue de surface (14), et lors d'un actionnement du deuxième élément de commande (12) par l'utilisateur, pour attribuer à la première zone d'affichage (4) une troisième étendue de surface (23) et pour attribuer à la deuxième zone d'affichage (5) une quatrième étendue de surface (24), la troisième étendue de surface (23) étant plus petite que la première étendue de surface (13) et la quatrième étendue de surface (24) étant plus grande que la deuxième étendue de surface (14), un écran (3) étant ménagé, lequel présente la première et la deuxième zones d'affichage (4, 5), et le dispositif de commande (17) étant configuré pour déplacer les deux zones d'affichage (4, 5) sur l'écran (3) lorsque l'utilisateur actionne d'abord l'un élément de commande et ensuite l'autre élément de commande (7, 12),
**caractérisé en ce que**
les deux zones d'affichage (4, 5) présentent respectivement un point de référence (16) et **en ce que** les points de référence (16), avant et après le déplacement, présentent le même écart l'un par rapport à l'autre, la première zone d'affichage (4) et la deuxième zone d'affichage (5) étant respectivement réalisées de forme rectangulaire et étant orientées sur une trame (15), le coin supérieur droit de la première zone d'affichage (4) et le coin supérieur gauche de la deuxième zone d'affichage (5) étant respectivement situés sur le même point de référence (16), le dispositif de commande (17) étant configuré pour déplacer le point de référence (16) lors du déplacement des deux zones d'affichage (4, 5).

2. Appareil ménager selon la revendication 1, **caractérisé en ce que** la première zone d'affichage (4), dans sa première étendue de surface (13), et la deuxième zone d'affichage (5), dans sa quatrième étendue de surface (24), se chevauchent.

3. Appareil ménager selon l'une quelconque des revendications 1 à 2, **caractérisé en ce que** les premiers réglages de fonctionnement (6) décrivent plusieurs modes de fonctionnement de l'appareil ménager (1) et **en ce que** les deuxièmes réglages de fonctionnement (11) sont attribués à un mode de fonctionnement respectif et décrivent une grandeur physique.

4. Appareil ménager selon la revendication 3, **caractérisé en ce que** l'appareil ménager (1) est réalisé comme appareil de cuisson et **en ce que** les modes de fonctionnement (6) comprennent plusieurs types de chauffage de l'appareil de cuisson et **en ce que** la grandeur physique (11) est une température à laquelle l'appareil de cuisson chauffe.

5. Appareil ménager selon l'une quelconque des revendications 1 à 2, **caractérisé en ce que** les premiers réglages de fonctionnement (6) décrivent une première grandeur physique et **en ce que** les deuxièmes réglages de fonctionnement (11) décrivent une deuxième grandeur physique.

6. Appareil ménager selon la revendication 5, **caractérisé en ce que** l'appareil ménager (1) est réalisé comme micro-ondes ou four à micro-ondes et **en ce que** la première grandeur physique (6) est une puissance du micro-ondes ou du four à micro-ondes et **en ce que** la deuxième grandeur physique (11) est une période pendant laquelle le micro-ondes ou le four à micro-ondes fournit la puissance.

7. Appareil ménager selon l'une quelconque des revendications 1 à 2, **caractérisé en ce que** dans un premier mode de fonctionnement de l'appareil ménager (1), les premiers réglages de fonctionnement (6) décrivent une première grandeur physique et les deuxièmes réglages de fonctionnement (11) décrivent une deuxième grandeur physique et **en ce que** dans un deuxième mode de fonctionnement de l'appareil ménager (1), les premiers réglages de fonctionnement (6) décrivent plusieurs modes de fonctionnement de l'appareil ménager (1) et **en ce que** les deuxièmes réglages de fonctionnement (11) sont attribués à un mode de fonctionnement respectif et décrivent une grandeur physique et **en ce que** l'appareil ménager (1), au moyen de l'actionnement du premier ou du deuxième élément de commande (7, 12), est commutable entre le premier et le deuxième modes de fonctionnement.

8. Appareil ménager selon la revendication 7, **caractérisé en ce que** l'appareil ménager (1) est réalisé en tant qu'un four à micro-ondes et **en ce que** le premier mode de fonctionnement est un mode à micro-ondes et **en ce que** dans le deuxième mode de fonctionnement est un mode de four du four à micro-ondes et **en ce que** dans le mode à micro-ondes la première grandeur physique (6) est une puissance du four à micro-ondes et la deuxième grandeur physique (11) est une période pendant laquelle le four à micro-ondes fournit la puissance, et **en ce qu'**en mode de four, les modes de fonctionnement (6) comprennent plusieurs types de chauffage et la grandeur physique (11) est une température à laquelle le four à micro-ondes chauffe.

9. Appareil ménager selon l'une quelconque des revendications 1 à 8, **caractérisé en ce que** l'écran (3) est réalisé en tant qu'un écran TFT et/ou **en ce que** le premier et/ou le deuxième éléments de commande (7, 12) sont réalisés en tant qu'un sélecteur rotatif.

10. Appareil ménager selon la revendication 9, **caractérisé en ce que** l'actionnement du premier et/ou du deuxièmes sélecteurs rotatifs (7, 12) comprend un contact et/ou une rotation de celui-ci.

11. Appareil ménager selon l'une quelconque des revendications 1 à 10, **caractérisé en ce que** la première zone d'affichage (4), la deuxième zone d'affichage (5), le premier élément de commande (7), le deuxième élément de commande (12) et/ou l'appareil de commande (17) sont intégrés dans un module de commande (2).

12. Appareil ménager selon la revendication 11, **caractérisé en ce qu'**un côté frontal ou un côté supérieur (26) de l'appareil ménager (1) présente le module de commande (2).

13. Procédé de fonctionnement d'un appareil ménager (1), notamment d'un appareil de cuisson, de préférence d'un appareil ménager selon l'une quelconque des revendications 1 à 14, une première étendue de surface (13) étant attribuée à une première zone d'affichage (4) pour l'affichage de premiers réglages de fonctionnement (6) de l'appareil ménager (1), et une deuxième étendue de surface (14) étant attribuée à une deuxième zone d'affichage (5) pour l'affichage de deuxièmes réglages de fonctionnement (11) de l'appareil ménager (1), lorsqu'un utilisateur actionne un premier élément de commande (7) pour la sélection de l'un des premiers réglages de fonctionnement (6), et une troisième étendue de surface (23) étant attribuée à la première zone d'affichage (4), et une quatrième étendue de surface (24) étant attribuée à la deuxième zone d'affichage (5) lorsque l'utilisateur actionne un deuxième élément de commande (12) pour la sélection de l'un des deuxièmes réglages de fonctionnement (11), la troisième étendue de surface (23) étant plus petite que la première étendue de surface (13) et la quatrième étendue de surface (24) étant plus grande que la deuxième étendue de surface (14), les deux zones d'affichage (4, 5) étant déplacées sur un écran (3), lequel présente la première et la deuxième zones d'affichage (4, 5), lorsque l'utilisateur actionne d'abord l'un élément de commande et ensuite l'autre élément de commande (7, 12), **caractérisé en ce que** les deux zones d'affichage (4, 5) présentent respectivement un point de référence (16) et **en ce que** les points de référence (16), avant et après le déplacement, présentent le même écart l'un par rapport à l'autre, la première zone d'affichage (4) et la deuxième zone d'affichage (5) étant respectivement réalisées de forme rectangulaire et étant orientées sur une trame (15), le coin supérieur droit de la première zone d'affichage (4) et le coin supérieur gauche de la deuxième zone d'affichage (5) étant respectivement situés sur le même point de référence (16), le point de référence (16) étant déplacé lors du déplacement des deux zones d'affichage (4, 5).
